# EUROPÄISCHE PATENTANMELDUNG

(11) **EP 0 938 182 A2**
(43) Veröffentlichungstag der Anmeldung: **25.08.1999**
(21) Anmeldenummer: 98105153.5
(22) Anmeldetag: 21.03.1998
(51) Int. Cl.: H02K 5/167

(54) **Lageranordnung**

(30) Priorität: 18.02.1998 DE 19806839
(71) Anmelder: RENK AKTIENGESELLSCHAFT, 86159 Augsburg (DE)
(72) Erfinder: Meyer, Joachim, 30539 Hannover (DE)
(74) Vertreter: Schober, Stefan, Dipl.-Ing.

(57) **Zusammenfassung**

Lageranordnung zur Lagerung eines Rotors (6) relativ zu einer Maschine. Lager (8) sind in Kreisöffnungen (9) von Kreisscheiben (10) exzentrisch zum Kreisöffnungsmittelpunkt (12) angeordnet und in der Kreisöffnung (9) um den Kreisöffnungsmittelpunkt (12) in verschiedenen Winkelpositionen befestigbar.

## Beschreibung

Die Erfindung betrifft eine Lageranordnung zur Lagerung eines Rotors relativ zu einem Stator einer Maschine.

Durch die Erfindung soll die Aufgabe gelöst werden, mögliche Unterschiede zwischen den Rotations-Symmetrieachsen des Stators und des Rotors nachträglich, wenn die Maschine in Lagern gelagert wird, noch ausgleichen zu können. Ferner soll gemaß der Erfindung eine leichte und einfache Montage und Demontage eines Lageroberteils eines Lagers möglich sein, welches aus einem Lageroberteil und einem Lagerunterteil besteht, die an einer axialen Ebene aneinander angrenzen. Die Lageranordnung soll eine einfache Konstruktion sein und wenig Material benötigen.

Diese Aufgabe wird gemaß der Erfindung durch die kennzeichnenden Merkmale von Anspruch 1 gelöst.

Die Lager enthalten vorzugsweise eine kugelgelenkige Lagerung zwischen einem radial inneren Lagerteil und einem radial äußeren Lagerteil. Dadurch können sich die Rotationsachsen der beiden Lager der Maschine automatisch aufeinander ausrichten, wenn die eine und/oder andere Kreisscheibe um ihren Scheibenmittelpunkt gedreht wird.

Vorteile der Erfindung sind: Rotor und Stator der Maschine können auch nach der Montage in den Lagern noch durch exzentrische Verstellung der Lager eingestellt werden. Die Lager sind normalerweise zweiteilig und bestehen aus einem Unterteil und einem darauf angeordneten Oberteil. Durch die zum Lager exzentrische Kreisöffnung können die Lageroberteile leichter montiert und demontiert werden. Somit wird die Montage und Demontage einfacher. Es sind nur wenige, einfache Teile erforderlich.

Weitere Merkmale der Erfindung sind in den Unteransprüchen enthalten.

Die Erfindung wird im folgenden mit Bezug auf die Zeichnungen anhand einer bevorzugten Ausführungsform als Beispiel beschrieben. In den Zeichnungen zeigen
- Fig. 1: einen schematischen Axialschnitt durch eine Lageranordnung einer Maschine gemäß der Erfindung,
- Fig. 2: eine schematische Stirnansicht der Lageranordnung von Fig. 1.

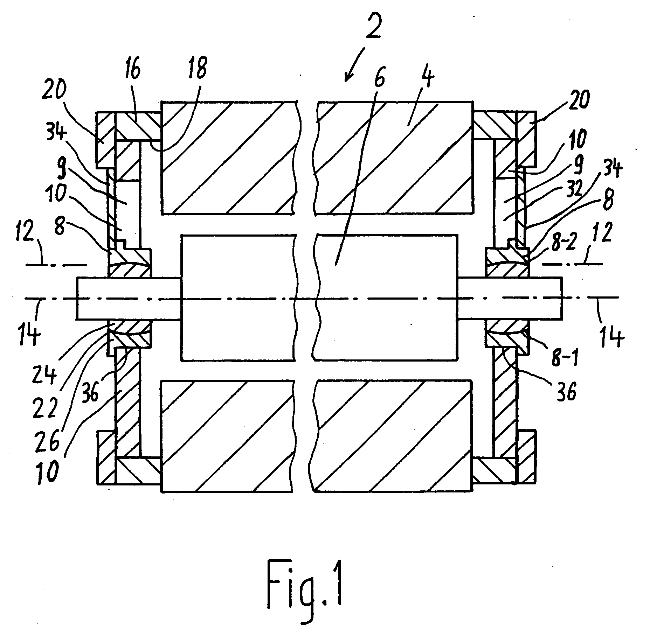

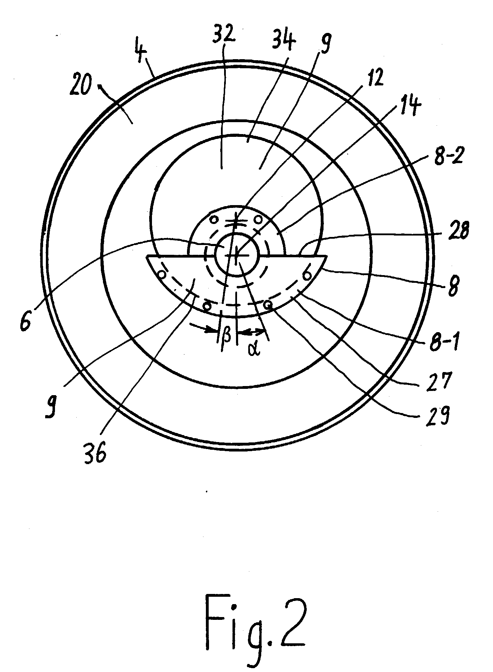

Fig. 1 zeigt eine Maschine 2 mit einem Stator 4 und einem axial durch ihn sich erstreckenden Rotor 6. Der Rotor 6 ist an seinen beiden Enden je durch ein Lager 8 in einer kreisrunden Öffnung 9 einer Kreisscheibe 10 drehbar gelagert. Der radiale Mittelpunkt 12 der Kreisöffnung 9 liegt radial versetzt zur Drehachse 14, welche sich axial durch den Rotor 6 und axial durch die Lager 8 erstreckt. Die Kreisscheibe 10 ist um ihren radialen Mittelpunkt, in welchem sich die Drehachse 14 befindet, relativ zu einem Maschinengehäuse oder Maschinenrahmen 16 auf verschiedene Drehpositionen einstellbar und befestigbar. Siehe Winkel Alpha in Fig. 2. Zu diesem Zwecke kann die Kreisscheibe 10 in einer kreisrunden Maschinenöffnung 18 des Maschinenrahmens 16 angeordnet und durch einen Flansch 20 mit dem Maschinenrahmen 16 wahlweise in verschiedenen Drehpositionen befestigt werden. Gemaß anderer Ausführungsform kann die Kreisscheibe 10 an ihrem Außenumfang gleichzeitig als Flansch 20ausgebildet sein und dadurch den Flansch 20 ersetzen. In diesem Falle braucht die Kreisscheibe 10 nicht in einer Maschinenöffnung 18 des Maschinenrahmens 16 untergebracht zu sein.

Durch Drehen der einen und/oder der anderen Kreisscheibe 10 der beiden Lager 8 um einen Winkel 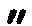 α" kann der Rotor 6 relativ zum Stator 4 koaxial oder exzentrisch mit parallelen oder schrägen Mittelachsen zueinander eingestellt werden, je nach Erfordernis der Praxis.

Die Lager 8 enthalten vorzugsweise eine kugelgelenkige Lagerung 22 zwischen einem radial inneren Lagerteil 24 und einem radial äußeren Lagerteil 26. Damit wird sichergestellt, daß der Rotor 6 auch bei größeren radialen Verstellungen der Lager 8 nicht in diesen Lagern klemmt.

Der Kreismittelpunkt 12 der Kreisöffnung 9 befindet sich vorzugsweise vertikal oberhalb der Rotationsachse 14 der Lager 8.

Das Lager 8 ist mit seiner Drehachse 14 um den radialen Mittelpunkt 12 der Kreisöffnung 9 herum auf verschiedene Winkelpositionen (β) verstellbar und in der gewünschten Winkelposition an der Kreisscheibe 10 durch Befestigungsmittel befestigbar, z.B. ein Flansch 27 und Gewindebolzen 29.

Das Lager 8 besteht aus einem Lagerunterteil 8-1 und einem lösbar mit ihm verbundenen Lageroberteil 8-2. Ihre Teilungsebene 28 erstreckt sich axial zur Lagerdrehachse 14 und quer zu einer theoretischen Verbindungslinie, welche die Lagerdrehachse 14 mit dem Kreisöffnungs-Mittelpunkt 12 geradlinig verbindet. Das Lageroberteil 8-2 kann in dem großen, über ihm gelegenen Öffnungsbereich 32 der Kreisöffnung 9 leicht am Lagerunterteil 8-2 montiert und demontiert werden. Der Öffnungsbereich 32 kann durch eine Verschlußplatte 34 geschlossen werden.

Das Lagerunterteil (8-1) hat eine kreisbogenförmige Zentrierfläche (36) mit einem Kreismittelpunkt (12), welcher von der Lagerdrehachse (14) einen radialen Abstand hat, welcher größer ist als der kleinste radiale Abstand der Lagerdrehachse (14) von der Zentrierfläche (36).

Der Radius der Zentrierfläche (36) ist an den Radius der kreisrunden Öffnung (9) derart angenähert, daß sie zusammen eine Passung bilden.

## Patentansprüche

1. Lageranordnung zur Lagerung eines Rotors relativ zu einem Stator einer Maschine,
**dadurch gekennzeichnet,**
daß in einer Maschinenplatte (10) eine kreisrunde Öffnung (9) gebildet ist, daß ein Lager (8) mit seiner Lagerdrehachse (14) zur Lagerung des Rotors (6) exzentrisch zum radialen Öffnungsmittelpunkt (12) in der kreisrunden Öffnung (9) angeordnet ist,
und daß das Lager (8) mit der Lagerdrehachse (14) in der Öffnung (10) um den Öffnungsmittelpunkt (12) auf verschiedene Winkelpositionen verstellbar und in der jeweils gewünschten Winkelposition an der Maschinenplatte (10) befestigbar ist.

2. Lageranordnung nach Anspruch 1,
**dadurch gekennzeichnet,**
daß der Öffnungsmittelpunkt (12) oberhalb der Lagerdrehachse (14) angeordnet ist.

3. Lageranordnung nach Anspruch 1 oder 2,
**dadurch gekennzeichnet,**
daß das Lager (8) eine kugelgelenkige Lagerstelle (22) zwischen einem radial inneren Lagerteil (24) und einem radial äußeren Lagerteil (26) aufweist.

4. Lageranordnung nach einem der vorhergehenden Ansprüche,
**dadurch gekennzeichnet,**
daß das Lager (8) aus einem Lagerunterteil (8-1) und einem davon abnehmbaren Lageroberteil (8-2) besteht, deren Teilungsebene sich axial zur Lagerdrehachse (14) und quer zu einer theoretischen Verbindungslinie erstreckt, welche die Lagerdrehachse (14) mit dem Öffnungsmittelpunkt (12) geradlinig verbindet.

5. Lageranordnung nach einem der vorhergehenden Ansprüche,
**dadurch gekennzeichnet,**
daß die Maschinenplatte (10) an ihrem Außenumfang mit einem Flansch (20) zur Befestigung an einem Maschinenteil (16) versehen ist.

6. Lageranordnung nach einem der vorhergehenden Ansprüche,
**dadurch gekennzeichnet,**
daß die Maschinenplatte (10) an einem Maschinenrahmen (16) oder einem Maschinengehäuse um die Lagerdrehachse (14) herum in verschiedene Winkelpositionen drehbar und in jeder gewünschten Winkelposition an dem Maschinenrahmen (16) oder Maschinengehäuse befestigbar ist.

7. Lageranordnung nach einem der vorhergehenden Ansprüche,
**dadurch gekennzeichnet,**
daß zwei Maschinenplatten (10) mit je einem Lager (8) in einer kreisrunden Öffnung (9) mit axialem Abstand voneinander angeordnet sind.

8. Lageranordnung nach einem der vorhergehenden Ansprüche,
**dadurch gekennzeichnet,**
daß das Lager (8) ein Lagerunterteil (8-1) hat,
welches eine kreisbogenförmige Zentrierfläche (36) mit einem Kreismittelpunkt (12) aufweist, welcher von der Lagerdrehachse (14) einen radialen Abstand hat, welcher größer ist als der kleinste radiale Abstand der Lagerdrehachse (14) von der Zentrierfläche (36).

9. Lageranordnung nach Anspruch 7,
**dadurch gekennzeichnet,**
daß der Radius der Zentrierfläche (36) an den Radius der kreisrunden Öffnung (9) angenähert ist, so daß sie zusammen eine Passung bilden.

10. Lageranordnung mit einem Radiallager (8),
**dadurch gekennzeichnet,**
daß das Radiallager (8) ein Lagerunterteil (8-1) hat, welches eine kreisbogenförmige Zentrierfläche (36) mit einem Kreismittelpunkt (12) aufweist,
welcher von der Lagerdrehachse (14) einen radialen Abstand hat, welcher größer ist als der kleinste radiale Abstand der Lagerdrehachse (14) von der Zentrierfläche (36).
